# FASCICULE DE BREVET EUROPEEN

(11) **EP 1 157 950 B1**
(45) Date de publication et mention de la délivrance du brevet: **11.05.2005**
(21) Numéro de dépôt: 01401366.8
(22) Date de dépôt: 23.05.2001
(51) Int. Cl.: B65G 25/02, B21C 47/24

(54) **Dispositif de convoyage d'objets massifs, en particular de bobines métalliques**
Vorrichtung zum Fördern von massiven Gegenständen, insbesondere Metallspulen
Device for conveying bulk objects, especially metal coils

(30) Priorité: 25.05.2000 FR 0006712
(43) Date de publication de la demande: 28.11.2001
(73) Titulaire: Vai Clecim, 42403 Saint-Chamond (FR)
(72) Inventeur: Lecrivain, Alain, 77380 Combs la Ville (FR)
(74) Mandataire: Michelet, Alain

(56) Documents cités:
- DE-A- 1 935 021
- US-A- 3 664 518
- US-A- 4 387 800
- US-A- 5 025 912

## Description

L'invention a pour objet un dispositif de convoyage, pas à pas, d'objets massifs selon la préambule de la revendication 1 et s'applique plus spécialement au déplacement de bobines dans les installations de fabrication et de traitement de bandes métalliques.

Dans l'industrie métallurgique, les tôles minces et les feuillards, qui se présentent, habituellement, sous forme de bandes enroulées en bobines, sont réalisées à partir d'un produit brut tel qu'une brame qui doit subir diverses opérations de laminage à chaud puis de laminage à froid jusqu'à l'obtention de l'épaisseur souhaitée ainsi que, le cas, échéant, divers traitements tels que recuit, décapage, skin-pass, etc...

Jusqu'à une date récente, ces opérations étaient réalisées en faisant défiler successivement chaque bobine dans des installations séparées. Chaque installation est alors associée à une dérouleuse et une enrouleuse placées respectivement en amont et en aval, dans le sens de défilement, chaque bobine étant réenroulée à la sortie d'une installation pour être transportée sur une dérouleuse placée à l'entrée de l'installation suivante.

Il faut donc disposer de moyens de transport des bobines entre les installations de traitement.

D'autre part, les vitesses de défilement dans les diverses installations sont souvent différentes et il est donc nécessaire de prévoir des possibilités de stockage d'un certain nombre de bobines entre deux installations successives.

Les bobines peuvent être transportées l'une après l'autre au moyen d'un pont-roulant ou bien, au niveau du sol, par un dispositif de convoyage.

Un tel dispositif comprend, habituellement, une série de stations de dépose des bobines, associée à un moyen de transfert simultané des bobines, de chaque station de dépose à la suivante, chaque bobine avançant pas à pas depuis la sortie d'une installation de traitement jusqu'à l'entrée de l'installation suivante.

On maintient ainsi, entre deux installations de traitement, un certain nombre de bobines stockées sur les stations de dépose.

Normalement, la longueur de bande enroulée sur une bobine est de plusieurs centaines de mètres et son poids peut atteindre plusieurs dizaines de tonnes. Un convoyeur comporte, habituellement, quatre ou cinq stations de dépose, ce qui correspond à une charge totale de 100 à 200 tonnes. En cas de besoin, on peut disposer plusieurs convoyeurs l'un après l'autre, de façon à augmenter les possibilités de stockage et la distance de transport.

Depuis quelques années, on cherche à réaliser des lignes continues permettant de faire passer la bande directement d'une installation à la suivante mais les possibilités sont limitées et il existe toujours des installations séparées qui nécessitent un transport des bobines sur une certaine distance.

D'une façon générale, un convoyeur pas à pas comprend une série fixe de stations de dépose réparties suivant une direction longitudinale de déplacement et centrées dans des plans transversaux écartés d'un pas constant et une série mobile de stations de reprise écartées du même pas et disposées sur une poutre de support longitudinale déplaçable, d'une part verticalement, entre une position abaissée et une position relevée pour lesquelles les stations de reprise sont placées, respectivement, au dessous et au dessus des stations de dépose et, d'autre part, longitudinalement, entre une position reculée et une position avancée pour lesquelles chaque station de reprise est centrée, alternativement, dans les plans transversaux de deux stations de dépose successives.

Ainsi, dans la position reculée de la poutre, les stations de reprise sont placées au dessous des stations de dépose et centrées dans les mêmes plans transversaux que celles-ci. Un soulèvement de l'ensemble de la poutre jusqu'à sa position relevée permet donc de faire prendre en charge par chaque station de reprise la bobine placée sur la station de dépose correspondante.

La poutre de support est alors avancée d'un pas en déplaçant l'ensemble des bobines au dessus du sol, chaque station de reprise venant ainsi se placer au dessus de la station de dépose suivante. Un abaissement de la poutre permet de déposer les bobines sur les stations de dépose correspondantes. La poutre ainsi déchargée peut alors revenir dans sa position reculée initiale, les stations de reprise, passant au dessous des bobines placées sur les stations de dépose fixes.

Habituellement, les stations de dépose sont constituées chacune de deux parties d'appui disposées sur le sol, ménagées de part et d'autre d'une tranchée dans laquelle est placée la poutre longitudinale de support, chaque station de reprise se trouvant ainsi entre les deux parties d'appui de la station de dépose correspondante.

Ces stations de reprise sont nécessairement assez étroites et il faut donc que les déplacements verticaux et horizontaux s'effectuent sans aucun à-coup pour éviter un risque de déséquilibre et de chute d'une bobine dont le poids peut dépasser 20 tonnes.

Etant donné que le dispositif de convoyage doit stocker plusieurs bobines, la charge totale supportée par la poutre peut être de l'ordre de 100 à 200 tonnes. Une poutre capable de supporter une telle charge doit évidemment suffisamment rigide et avoir, en particulier, une hauteur assez importante pour résister à la flexion.

D'autre part, les stations de support sont relativement étroites et la poutre doit se déplacer parallèlement à elle même, en restant parfaitement horizontale, de façon à assurer l'équilibre des bobines. A cet effet, on utilise, habituellement, des systèmes à parallélogrammes déformables comprenant au moins deux ensembles de bielles dont la rotation est commandée par des vérins pour déterminer le soulèvement et l'abaissement de la poutre. Pour éviter l'arc-boutement, les bielles doivent être légèrement inclinées au départ, dans la position abaissée de la poutre. De tels systèmes sont donc assez encombrants et augmentent la hauteur totale du dispositif.

L'invention a pour objet de remédier à ces inconvénients et de résoudre l'ensemble des problèmes qui viennent d'être exposés grâce à un nouveau dispositif de convoyage particulièrement simple et peu onéreux qui permet d'assurer, en toute sécurité, le déplacement pas à pas d'objets volumineux et très lourds tels que des bobines métalliques. Le problem est résolu avec un dispositif selon la revendication 1.

Conformément à l'invention, la poutre de support des stations de reprise repose sur le sol par l'intermédiaire d'au moins deux organes d'appui coulissant, de hauteur réglable, qui s'étendent verticalement sur au moins une partie de la hauteur de la poutre et comprennent, respectivement, au moins deux vérins de réglage de niveau de la poutre actionnés en synchronisme et associés, respectivement, à au moins deux moyens de guidage coulissant de la poutre de support permettant un déplacement longitudinal aller-retour de celle-ci, respectivement dans un sens d'avancement en position relevée et dans un sens de recul en position abaissée, chaque vérin comprenant deux éléments, respectivement fixe et mobile, prenant appui en des sens opposés, respectivement sur la poutre et sur le sol.

De façon particulièrement avantageuse, les vérins de réglage de niveau de la poutre sont des vérins hydrauliques associés à un circuit d'alimentation à un débit constant identique pour tous les vérins, de façon à maintenir l'horizontalité de la poutre pendant ses déplacements, quelle que soit la répartition de la charge.

Comme on l'a indiqué, en effet, la poutre de support doit supporter la charge de plusieurs bobines et comprend, à cet effet, une semelle horizontale sur laquelle sont montées les stations de reprise et au moins une âme de raidissement verticale ayant une hauteur suffisante pour assurer la rigidité de la poutre sous la charge des objets transportés. De façon particulièrement avantageuse, les vérins de réglage s'étendent sur au moins une partie de la hauteur de l'âme, dans la position abaissée de la poutre de façon que la hauteur totale du dispositif soit du même ordre que celle de la poutre.

Dans un mode de réalisation préférentiel, la poutre longitudinale présente, en section transversale, un profil en U renversé comprenant une partie supérieure sensiblement horizontale, formant une semelle pour les stations de reprise et deux ailes sensiblement verticales, formant âmes de raidissement de la poutre et, dans la position abaissée de celle-ci, au moins les vérins de réglage de niveau sont logés à l'intérieur de la poutre, entre les deux ailes.

Dans un mode de réalisation particulièrement avantageux, chaque organe d'appui coulissant comprend un chariot de support constitué d'un châssis reposant sur au moins un rail de guidage longitudinal par l'intermédiaire de deux organes de roulement écartés longitudinalement et sur lequel est monté au moins un vérin hydraulique de réglage de niveau de la poutre de support.

En particulier, le chariot peut être porté par deux essieux écartés longitudinalement, de part et d'autre d'une partie centrale du châssis formant une plateforme d'appui d'un vérin hydraulique de réglage ayant un élément fixé sur la plateforme et un élément mobile prenant appui sur la poutre.

Selon une autre caractéristique particulièrement avantageuse, la poutre est solidarisée, en déplacement vertical, avec les éléments mobiles des vérins et les chariots de support des vérins sont maintenus appliqués sur le chemin de guidage par un moyen anti-relevage s'opposant au soulèvement de l'un ou l'autre des chariots de support par rapport au chemin de guidage. A cet effet, les chariots de support peuvent avantageusement être reliés, dans le sens longitudinal, par au moins une barre de liaison constituée d'un profilé ayant au moins une semelle passant au dessous d'au moins deux galets anti-relevage écartés longitudinalement.

Dans un premier mode de réalisation de l'invention, l'ensemble de chaque chariot de support avec ses organes de roulement et le vérin de réglage présente une largeur inférieure à celle de l'espace entre les deux ailes de la poutre de façon à venir se loger au moins partiellement dans ledit espace, en position abaissée de la poutre.

Dans un second mode de réalisation, chaque chariot de support comprend un châssis placé entre les deux ailes de la poutre en U et reposant sur deux rails de guidage par l'intermédiaire de deux organes de roulement écartés longitudinalement et comprenant chacun une paire de roues placées à l'extérieur de la poutre et montées à deux extrémités d'un essieu passant dans un alésage du châssis et traversant les deux ailes de la poutre en passant dans des trous oblongs ménagés dans lesdites ailes et ayant chacun une hauteur suffisante pour permettre les déplacements verticaux de la poutre entre la position abaissée et la position relevée.

Avantageusement, chaque trou oblong de passage d'une extrémité d'un essieu a une largeur sensiblement égale au diamètre dudit essieu de façon à constituer un moyen de solidarisation, dans le sens longitudinal, de la poutre avec le chariot de support correspondant.

Le moyen de déplacement longitudinal alternatif de la poutre peut être constitué d'au moins un vérin hydraulique ayant un premier élément prenant appui sur une partie fixe et un second élément prenant appui sur une partie solidaire de la poutre, en déplacement longitudinal.

Cependant, du fait que les vérins de réglage de niveau déterminent un déplacement parfaitement vertical de la poutre, il n'y a pratiquement pas de réactions horizontales à encaisser. De ce fait, le moyen de déplacement longitudinal de la poutre peut être constitué d'un câble passant sur deux moyens de renvoi placée à deux extrémités du chemin de guidage et ayant deux brins fixés respectivement aux deux extrémités de la poutre de support, ledit câble étant entraîné en deux sens opposés pour la commande, respectivement, de l'avancement et du recul de la poutre.

D'autres caractéristiques avantageuses font l'objet des sous-revendications. Mais l'invention sera mieux comprise par la description qui va suivre de certains modes de réalisation particuliers, donnés à titre d'exemple et représentés sur les dessins annexés.
La figure 1 montre l'ensemble du dispositif de convoyage, en coupe longitudinale suivant I, I de la figure 2.
La figure 2 est une vue de dessus, en coupe partielle selon II, II de la figure 1.
Les figures 3, 4 et 5 sont des vues en coupe transversale, respectivement suivant III-III, IV-IV, V-V de la figure 1.
La figure 6 est une vue en coupe transversale d'une variante de réalisation.
Les figures 7 et 8 montrent, respectivement en vue de côté et en coupe transversale, une autre variante de réalisation.
La figure 9 montre schématiquement un autre mode de réalisation du dispositif de déplacement longitudinal.
La figure 10 montre, en élévation, un dispositif de convoyage à deux poutres attelées.

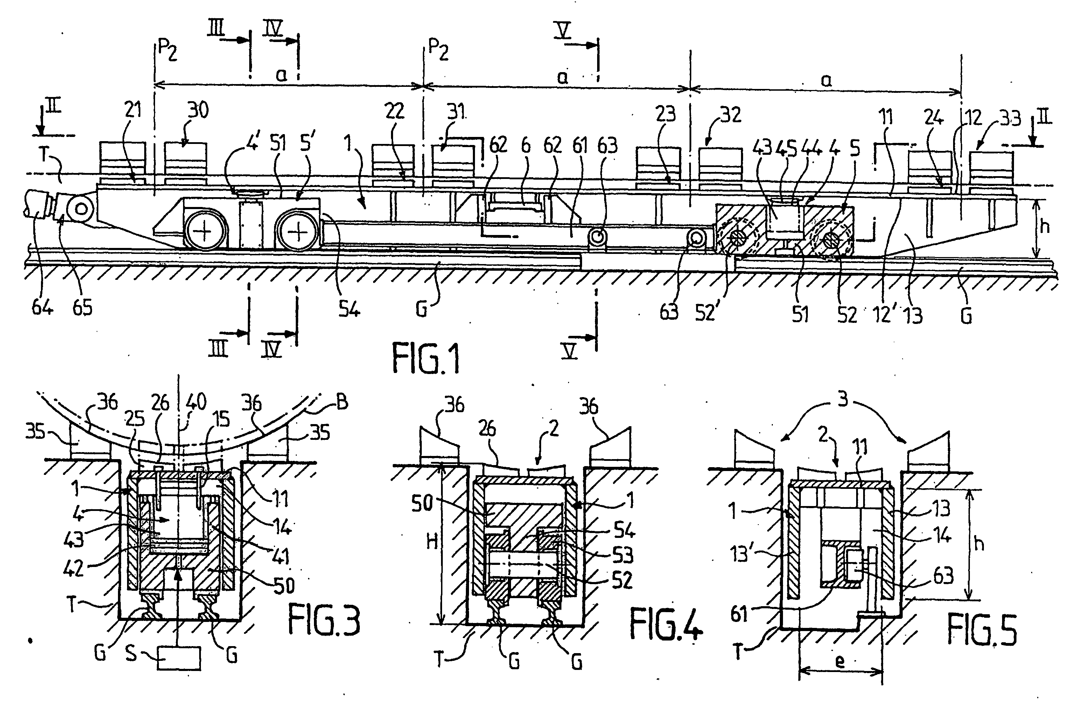

Sur les figures 1, 2, et 3 on a représenté, respectivement en élévation, en vue de dessus et en coupe transversale, l'ensemble d'un dispositif de convoyage selon l'invention qui comprend une série de stations de dépose 3 centrées sur un plan vertical longitudinal P1 et une poutre de support 1 centrée sur le même plan longitudinal P1 et sur laquelle sont disposées une série de stations de reprise 2. Les stations de dépose 3 sont centrées, respectivement, sur une pluralité de plans transversaux P2 perpendiculaires au plan médian longitudinal P1 et écartés d'un pas constant (a). Chaque station de dépose 3 est constituée avantageusement de quatre patins 35 ayant des faces supérieures 36 légèrement inclinées par rapport à l'horizontale de façon à former un angle obtus largement ouvert, constituant un appui stable pour une bobine B, celle-ci ayant la forme d'un cylindre centré sur un axe horizontal placé dans le plan médian P1.

Dans l'exemple représenté, la poutre de support 1 porte quatre stations de reprise 21, 22, 23, 24 dont les plans transversaux sont écartés de la même distance (a).

Chaque station de reprise 2 associée à une station de dépose 3 peut être constituée également de quatre patins 25 disposés de part et d'autre, respectivement, du plan médian P1 et d'un plan transversal P2 et ayant des faces supérieures 26 inclinées par rapport à l'horizontale. L'inclinaison des faces des patins dépend de leur écartement et est déterminée de telle sorte que, dans une position verticale moyenne de la poutre 1, les faces 36 des patins de dépose 35 et les faces 26 des patins de reprise 25 enveloppent la face externe cylindrique de la bobine B.

Dans l'exemple de réalisation représenté sur la figure 3, les patins 35 constituant les stations de reprise 3 sont placées au niveau A du sol et la poutre de support 1 est logée dans une tranchée T ménagée dans un massif de fondation de façon que, dans la position basse représentée sur la figure 1, les stations de reprise 2 se trouvent au dessous du niveau des stations de dépose 3.

Comme habituellement, un tel dispositif de convoyage détermine le déplacement pas à pas des bobines suivant une direction longitudinale 10 parallèle au plan médian P1 de la poutre.

A cet effet, la poutre 1 peut se déplacer entre une position reculée 1a et une position avancée 1b représentée en trait mixte sur la figure 2, le déplacement longitudinal étant égal à la distance (a) entre les plans transversaux des stations de dépose et de reprise.

D'autre part, la poutre 1 peut se déplacer verticalement entre deux positions, respectivement relevée et abaissée, de part et d'autre d'une position moyenne pour laquelle les faces supérieures 26 des patins 25 des stations de reprise 2 sont placées dans le prolongement des faces supérieures 36 des patins 35 des stations de dépose 3.

De la sorte, dans la position abaissée de la poutre représentée en trait plein sur la figure 3, la bobine B repose, au niveau du sol, sur les patins 35 de la station de dépose 3. En revanche, dans la position relevée représentée en trait mixte, chaque bobine B est soulevée au dessus du sol par les patins 25 de la station de reprise correspondante 2.

La poutre 1 est alors avancée jusqu'à la position 1b représentée en trait mixte sur la figure 1, pour laquelle les bobines supportées par les stations de reprise 21, 22, 23, 24 sont centrées dans les plans transversaux des stations de dépose, respectivement 31, 32, 33, 34.

Un abaissement de la poutre 1 permet donc de poser les bobines sur les stations de dépose 31, 32, 33, 34, chaque bobine ayant ainsi avancé d'un pas (a). Entretemps, une nouvelle bobine a été posée sur la station de dépose 30 placée le plus en arrière.

La poutre 1 ainsi libérée de la charge des bobines est alors ramenée en arrière de la distance (a) pour revenir à sa position reculée 1a, chaque station de reprise 21, 22, 23, 24 venant se placer dans le plan transversal de la station de dépose placée en arrière, respectivement 30, 31, 32, 33.

On commande alors le soulèvement de la poutre 1 et les stations de reprise 21, 22, 23, 24 prennent en charge les bobines placées respectivement sur les stations de dépose 30, 31, 32, 33.

Pendant ce temps, la bobine placée sur la dernière station de dépose 34 la plus en avant a été retirée, par exemple au moyen d'un pont roulant si le dispositif de convoyage aboutit à l'entrée d'une installation de traitement.

Comme on l'a indiqué, un tel système de déplacement pas à pas était déjà connu mais l'invention diffère des dispositions précédentes par l'utilisation de moyens plus stables et moins encombrants pour la commande des déplacements longitudinaux et verticaux de la poutre de support.

En effet, comme le montrent les figures 1, 2 et 3, la poutre 1 prend appui, simplement, sur deux organes d'appui coulissant comprenant chacun un vérin 4, 4' de réglage du niveau en hauteur de la poutre 1 associé à un moyen 5, 5' permettant le coulissement longitudinal de la poutre 1, parallèlement à elle-même.

Pour supporter la charge très importante des bobines transportées, la poutre 1 est réalisée de façon particulièrement rigide en construction mécano-soudée et comprend une semelle 11 ayant une face supérieure 12 sur laquelle sont fixées les stations de reprise 21, 22, 23, 24 et au moins une nervure de raidissement 13 ayant une hauteur (h) suffisante pour donner à la poutre la résistance à la flexion nécessaire.

De façon particulièrement avantageuse, comme le montrent les figures 3, 4, 5, la poutre 1 présente une forme en caisson, à section en U renversé, comportant une semelle supérieure 11 et deux ailes verticales 13, 13' écartées l'une de l'autre d'une distance (e) de façon à ménager un espace interne 14 dans lequel est logé au moins le vérin 4 de réglage de niveau, dans sa position rétractée correspondant au niveau bas de la poutre.

Dans le mode de réalisation préférentiel représenté sur les figures, les vérins de réglage (4) sont des vérins hydrauliques comprenant chacun un corps fixe 41 limitant une chambre de vérin centrée sur un axe vertical 40 placé dans le plan médian longitudinal P1 de la poutre et dans laquelle est monté coulissant un piston 42 prolongé vers le haut par une tige de vérin 43. Celle-ci est munie, à sa partie supérieure, d'une platine 44 sur laquelle vient reposer une partie d'appui arrondie 45 fixée sur la face inférieure 12' de la semelle 11 et centrée sur l'axe 40 du vérin.

D'autre part, le corps 41 du vérin est monté sur un organe d'appui roulant constitué d'un châssis 50 reposant sur deux essieux écartés 52, 52'.

De préférence, la semelle 11 est reliée à la tige 43 du vérin 4 par des boulons articulés 15 qui assurent une fixation rotulante de la semelle 11 sur la tige 43 du vérin. La poutre 1 est ainsi solidarisée, en déplacement vertical, avec les organes d'appui 4, 5, 4', 5', lorsque les vérins 4, 4' sont bloqués.

D'autre part, chaque organe de roulement du chariot 5 comprend un essieu 52 portant une paire de roues 53 du type roue de chemin de fer à boudins de guidage.

Dans l'exemple représenté sur les figures 1 et 2, le châssis 50 comprend une partie centrale massive 51 prolongée, vers l'avant et l'arrière, par deux nervures médianes 54 munies chacune d'un alésage de passage de l'essieu 52, avec interposition d'un palier non représenté. Cette partie centrale 51 est munie d'un alésage dans lequel est monté coulissant le piston 42 du vérin et constitue donc le corps 41 du vérin 4.

Les roues 53 montées aux deux extrémités de chaque essieu 52 sont placées de part et d'autre de la nervure 54 et restent à l'intérieur de l'emprise du chariot 5, sans dépasser la largeur (e) de l'espace 14 compris entre les deux ailes 13, 13' de la poutre en caisson 1. De la sorte l'ensemble de l'organe d'appui comprenant le vérin 4, le châssis 5 et ses deux organes de roulement 53, 53' peut être logé, au moins en partie, à l'intérieur dudit caisson lorsque la poutre 1 est en position basse.

Il en résulte que, dans cette position abaissée de la poutre 1, les stations de dépose 2 se trouvent à une hauteur (H) au dessus du sol qui est simplement un peu supérieure à la hauteur (h) de la poutre nécessaire pour la résistance de celle-ci puisque la différence de hauteur correspond seulement à l'épaisseur des parties 25 et à la hauteur du chemin de roulement G constitué, dans le cas de la figure 4, par deux rails ayant une partie de roulement reposant sur une semelle.

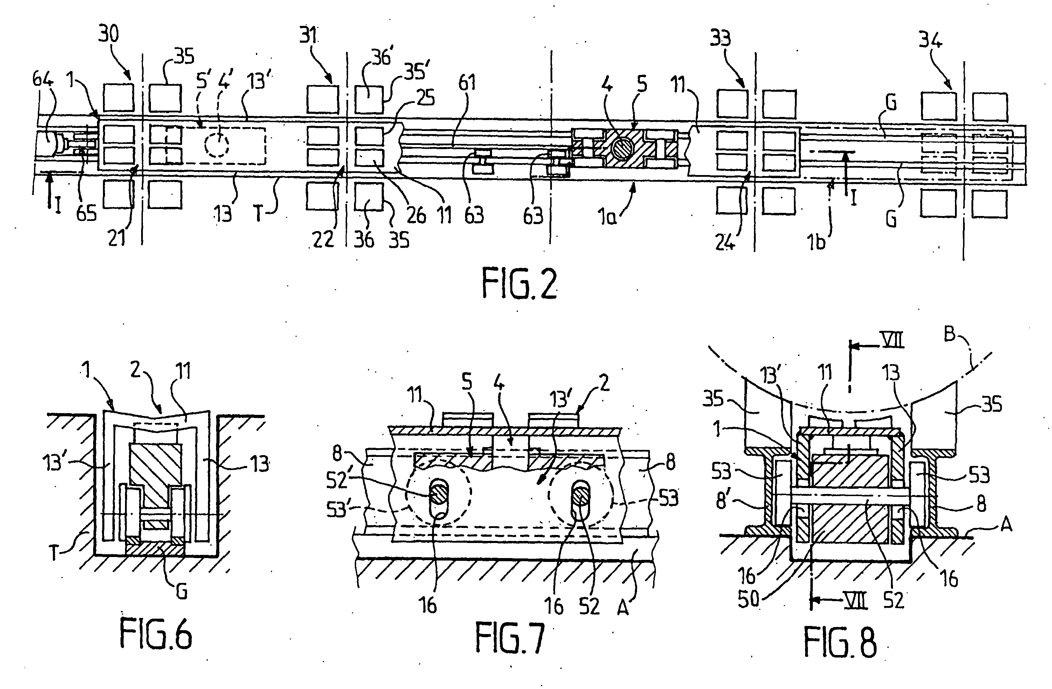

D'ailleurs, pour réduire encore cette hauteur, le chemin de roulement G peut être aménagé de façon à pénétrer également entre les deux ailes 13, 13' de la poutre 1, de la façon indiquée schématiquement sur la figure 6.

La disposition selon l'invention permet donc de réduire la hauteur globale du convoyeur, qui est à peine supérieure à la hauteur de la poutre et, par conséquent, de limiter la profondeur de la tranchée T qui doit être aménagée dans le massif de fondation pour loger le convoyeur.

D'autre part, la poutre 1 est guidée verticalement par rapport aux deux chariots 5, 5' et est donc solidarisée avec ces derniers dans le sens longitudinal de déplacement

Le convoyeur ainsi réalisé forme donc un ensemble plat qui se comporte comme un wagon reposant sur deux bogies roulant sur des rails.

Dans le mode de réalisation représenté sur les figures 1 et 2, les deux chariots 5, 5' de support des vérins 4, 4' sont reliés entre eux par un profil horizontal 61 qui assure la solidarisation des deux chariots 5, 5' en déplacement longitudinal. De plus, sur la face inférieure 12' de la semelle 11 peut être fixée une pièce de guidage 6 coulissant entre deux faces de guidage verticales 62 fixées sur le profil 61 et perpendiculaires à la direction longitudinale de défilement 10. Ainsi, lors des réglages de niveau, la poutre est maintenue, longitudinalement, par rapport aux deux chariot 5, 5'.

Les efforts appliqués sur la poutre par les deux vérins 4, 4' restent donc centrés dans des plans transversaux fixes et déterminent un déplacement rigoureusement vertical de chaque point d'appui de la poutre.

Il en résulte que chaque station de reprise 2 reste toujours centrée, entre la position abaissée et la position relevée, sur le plan transversal P2 de la station de dépose correspondante 3. Les risques de déséquilibre des bobines posées sur les stations de reprise 21 sont donc beaucoup moins grands que dans les dispositions utilisées jusqu'à présent.

En particulier, le déplacement des bobines s'effectue de façon beaucoup plus stable que dans les dispositions habituelles à parallélogrammes déformables dans lesquelles la poutre repose sur les extrémités de leviers qui ont nécessairement une longueur relativement importante et décrivent un arc de cercle.

Bien entendu, les deux vérins de réglage 4, 4' doivent être actionnés en synchronisme et à la même vitesse pour que la poutre 1 se déplace, parallèlement à elle même, en restant parfaitement horizontale.

Compte tenu de la charge très importante à déplacer, mais sur une faible hauteur, il est particulièrement intéressant d'utiliser, pour le réglage de niveau de la poutre 1, des vérins hydrauliques associés à un circuit de commande S facile à concevoir, permettant d'alimenter les vérins, dans un sens ou dans l'autre, à un même débit constant.

Les vérins 4, 4' étant identiques, les deux points d'appui 44, 45 de la poutre se déplacent à la même vitesse et sur une même hauteur, vers le haut ou vers le bas.

Il est à noter que la poutre 1 peut ne pas être chargée uniformément, au début et à la fin du déplacement d'une série de bobines. Il en résulte un risque de basculement de la poutre 1 qui, dans la disposition selon l'invention, peut être évité au moyen de deux galets anti-relevage 63 écartés longitudinalement et qui s'engagent entre deux ailes de la poutre de liaison 61, celle-ci pouvant avoir une forme en I ou en H. Ainsi, les deux chariots 5, 5' restent toujours appliqués sur le chemin de guidage G et maintiennent l'horizontalité de la poutre qui est, comme on l'a vu, fixée sur les tiges 43 des vérins par des boulons articulés 15.

Le déplacement longitudinal de la poutre 1 entre ses deux positions respectivement reculée et avancée, peut être commandé simplement par un vérin 64 dont la tige est reliée, par une articulation, à une extrémité de la poutre 1, ce vérin 64, qui n'a été représenté que partiellement sur la figure 1, prend appui, dans le sens opposé, sur le massif de fondation.

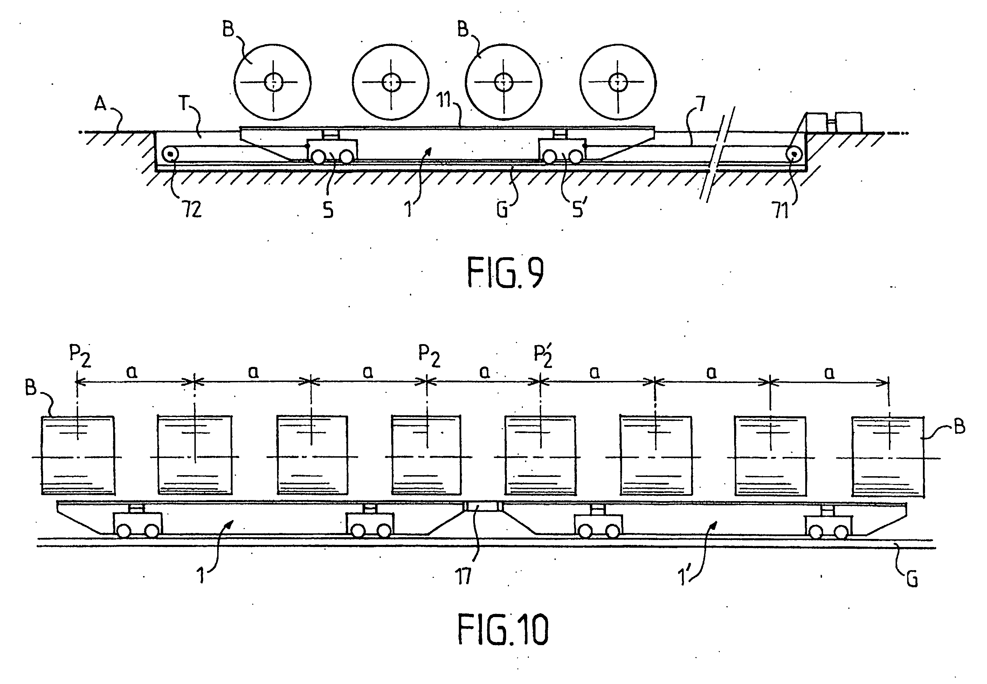

Comme on l'a déjà indiqué, le dispositif selon l'invention présente l'avantage de n'exercer aucune réaction horizontale sur le vérin 64 de déplacement longitudinal étant donné que les vérins 4, 4' exercent des efforts parfaitement verticaux sur la poutre 1 qui est guidée directement par rapport aux chariots de support 5, 5'. De ce fait, le déplacement longitudinal de la poutre 1 peut être commandé par un lien souple tel qu'une chaîne ou un câble, de la façon indiquée schématiquement sur la figure 9.

Dans ce cas, en effet, les deux extrémités de la poutre 1 sont fixées sur deux brins d'un câble 7 entraîné, dans un sens ou dans l'autre par un treuil et passant sur une poulie de renvoi 72 placée à l'autre extrémité de la tranchée T. Une telle disposition serait moins onéreuse car elle évite l'utilisation de vérins longitudinaux de grandes dimensions.

Bien entendu, l'invention ne se limite pas aux détails du mode de réalisation qui vient d'être décrit, et couvre également les variantes qui pourraient être imaginées sans s'écarter du cadre de protection défini par les revendications.

Par exemple, dans un autre mode de réalisation représenté sur les figures 7 et 8, les roues 53, 53' du chariot 5 sont placées à l'extérieur de la poutre en caisson 1.

Dans ce cas, chaque aile 13, 13' de la poutre est munie, pour le passage de l'axe 52 de chaque essieu, d'un trou oblong 16 ayant une hauteur suffisante pour permettre les déplacement verticaux de la poutre 1 et une largeur sensiblement égale, au jeu près, au diamètre de l'essieu 52, de façon à assurer la solidarisation, dans le sens longitudinal de la poutre 1 avec chacun des chariots 5, 5'.

D'autre part, grâce à la très faible hauteur de l'ensemble du convoyeur, on peut éviter de placer celui-ci dans une tranchée ménagée dans le massif de fondation.

Par exemple, dans le cas du mode de réalisation des figures 7 et 8, l'ensemble du dispositif peut être placé au dessus du niveau A du sol, la poutre 1 étant disposée entre deux supports longitudinaux 8, 8' sur lesquels sont montés les patins 35, 35'constituant les stations de dépose 3. Comme le montre la figure 8, ces supports longitudinaux peuvent être constitués simplement de profilés en I à l'intérieur desquels s'engagent les roues 53, 53' du chariot 5, chaque profilé ayant deux semelles horizontales écartées d'une hauteur un peu supérieure au diamètre des roues, respectivement une semelle inférieur qui sert de chemin de guidage et une semelle supérieure qui assure la fonction anti-relevage du chariot 5, en cas de risque de basculement de la poutre.

Cependant, les supports 8, 8' pourraient aussi être constitués, simplement de murets en béton placés de part et d'autre de la poutre 1 et portant les patins 35, 35'.

D'autre part, pour augmenter les possibilités de stockage des bobines entre deux installations successives, il est possible d'utiliser plusieurs convoyeurs du type qui vient d'être décrit.

Dans ce cas, comme le montre la figure 10, les poutres 1, 1' de deux convoyeurs successifs sont simplement attelés par une bielle de liaison 17 dont la longueur est déterminée de façon à maintenir le pas (a) d'écartement des plans transversaux P2, P'2 des stations de reprise. Un système hydraulique facile à concevoir permet d'actionner en synchronisme les vérins de tous les convoyeurs de façon à assurer le déplacement pas à pas de l'ensemble des bobines.

Par ailleurs, compte tenu de la charge à transporter, il est particulièrement avantageux que la poutre 1 soit supportée par des vérins hydrauliques synchronisés, mais on pourrait aussi utiliser des vérins mécaniques à vis commandés par une même chaîne cinématique.

Les signes de référence insérés après les caractéristiques techniques mentionnées dans les revendications, ont pour seul but de faciliter la compréhension de ces dernières et n'en limitent aucunement la portée.

## Revendications

1. Dispositif de convoyage pas à pas d'objets massifs, comprenant une série fixe de stations de dépose (3) réparties suivant une direction longitudinale de déplacement et centrées dans des plans (P2) transversaux à la direction longitudinale et écartés selon la direction longitudinale d'un pas constant (a) et au moins une série mobile de stations de reprise (2) écartées selon la direction longitudinale du même pas (a) et disposées sur au moins une poutre de support longitudinale (1) déplaçable, d'une part, verticalement entre une position abaissée et une position relevée pour lesquelles les stations de reprise (2) sont placées, respectivement, au-dessous et au-dessus des stations de dépose (3) et, d'autre part, longitudinalement entre une position reculée et une position avancée pour lesquelles chaque station de reprise (2) est centrée, alternativement, dans les plans transversaux (P2) de deux stations de dépose (3) successives, **caractérisé par le fait que** la poutre de support (1) repose sur le sol par l'intermédiaire d'au moins deux organes d'appui coulissant de hauteur réglable (4, 5) (4', 5') qui s'étendent verticalement sur au moins une partie de la hauteur de la poutre (1) et qui comprennent, respectivement, au moins deux vérins (4, 4') de réglage de niveau actionnés en synchronisme et associés à au moins deux moyens (5, 5') de guidage coulissant de la poutre de support (1) permettant le déplacement longitudinal de celle-ci, respectivement dans un sens d'avancement en position relevée et dans un sens de recul en position abaissée, chaque vérin (4, 4') ayant deux éléments (41, 42) prenant appui en des sens opposés, respectivement sur la poutre (1) et sur le sol (A).

2. Dispositif de convoyage selon la revendication 1, **caractérisé par le fait que** la poutre de support (1) comprend une semelle horizontale (11) ayant une face supérieure (12) sur laquelle sont montées les stations de reprise (2) et une face inférieure (12') sur laquelle prennent appui les vérins de réglage (4, 4') et au moins une âme de raidissement verticale (13), ayant une hauteur (h) suffisante pour assurer la rigidité de la poutre (1) sous la charge des objets transportés, et que lesdits vérins de réglage (4, 4') s'étendent verticalement sur au moins une partie de la hauteur (h) de l'âme (13), dans la position abaissée de la poutre (1).

3. Dispositif de convoyage selon la revendication 2, **caractérisé par le fait que** la poutre de support (1) présente, en section transversale, un profil en U renversé comprenant une partie supérieure (11) sensiblement horizontale, sur laquelle sont ménagées les stations de reprise (2) et deux ailes sensiblement verticales (13, 13') de raidissement de la poutre (1), entre lesquelles sont logés au moins les vérins (4, 4') de réglage de niveau.

4. Dispositif de convoyage selon l'une des revendications précédentes, **caractérisé par le fait que** les vérins de réglage (4, 4') prennent appui sur au moins deux chariots (5, 5') reposant, par l'intermédiaire d'organes de roulement (53), sur un chemin de guidage (G) ménagé sur le sol, parallèlement à la direction longitudinale (10) de déplacement de la poutre (1), lesdits chariots (5, 5') constituant des moyens de guidage coulissant de la poutre (1) à un niveau constant déterminé par les vérins de réglage (4, 4').

5. Dispositif de convoyage selon la revendication 4, **caractérisé par le fait que** chaque chariot de support comprend un châssis rigide (50) reposant sur le chemin de guidage longitudinal (G) par l'intermédiaire de deux organes de roulement (52, 53) (52', 53') écartés longitudinalement et sur lequel est monté au moins un vérin hydraulique (4) de réglage de niveau de la poutre de support (1).

6. Dispositif de convoyage selon la revendication 5, **caractérisé par le fait que** les deux organes de roulement du chariot (5) sont écartés longitudinalement de part et d'autre d'une partie centrale (51) du châssis (50) formant une plateforme d'appui d'au moins un vérin de réglage (4) ayant un premier élément (41) prenant appui sur le châssis (50) et un second élément (42, 43) prenant appui sur la poutre (1).

7. Dispositif de convoyage selon la revendication 6, **caractérisé par le fait que** chaque organe de roulement du chariot (5) comprend une paire de roues (53) roulant chacune sur un rail longitudinal (G) et montées sur un essieu (52) passant dans un alésage (55) à axe horizontal ménagé dans le châssis (50) du chariot (5).

8. Dispositif de convoyage selon l'une des revendications 4 à 7, **caractérisé par le fait que** les chariots de support (5, 5') des vérins de réglage (4, 4') sont solidarisés avec la poutre (1) dans le sens longitudinal de façon à former un ensemble plat se comportant comme un wagon roulant sur le chemin de guidage (G).

9. Dispositif de convoyage selon la revendication 8, **caractérisé par le fait que** les chariots (5, 5') de support des vérins de réglage (4, 4') sont reliés par une barre de liaison (61) de longueur fixe et que la poutre de support (1) est munie de moyens (6) de solidarisation avec la barre de liaison (61), dans le sens longitudinal.

10. Dispositif de convoyage selon l'une des revendications 8 et 9, **caractérisé par le fait que** chaque vérin de réglage (4, 4') comprend deux éléments (41, 42) solidarisés, en déplacement vertical, respectivement l'un (41) avec le chariot de support (5, 5') correspondant et l'autre (42) avec la poutre (1) et que lesdits chariots de support (5, 5') sont maintenus appliqués sur le chemin de guidage (G) par un moyen anti-relevage (63) s'opposant au soulèvement de l'un ou l'autre des chariots de support (5, 5') par rapport au chemin de guidage (G).

11. Dispositif de convoyage selon la revendication 10, **caractérisé par le fait que** les chariots de support (5, 5') des vérins de réglage (4, 4') sont reliés dans le sens longitudinal par au moins une barre de liaison constituée d'un profilé (61) ayant au moins une semelle passant au dessous d'au moins deux galets anti-relevage (63) écartés longitudinalement.

12. Dispositif de convoyage selon l'une des revendications 4 à 11, dans lequel les vérins de réglage de niveau (4, 4') prennent appui sur au moins deux chariots de support (5, 5') reposant, par l'intermédiaire d'organes de roulement (53, 53') sur un chemin de guidage (G), **caractérisé par le fait que** l'ensemble de chaque chariot de support (5) avec ses organes de roulement (53, 53') et le vérin de réglage (4) présente une largeur inférieure à celle de l'espace (14) entre les deux ailes (13, 13') de la poutre (1) de façon à venir se loger au moins partiellement dans ledit espace (14) en position abaissée de la poutre (1).

13. Dispositif de convoyage selon la revendication 11, **caractérisé par le fait que** le chemin de guidage (G) présente une largeur inférieure à l'espace (e) entre les deux ailes (13, 13') de la poutre (1) de façon à pénétrer au moins partiellement dans ledit espace, en position basse de la poutre (1).

14. Dispositif de convoyage selon l'une des revendications 4 à 11, dans lequel les vérins de réglage de niveau (4, 4') prennent appui sur au moins deux chariots de support (5, 5'), **caractérisé par le fait que** chaque chariot de support (5, 5') comprend un châssis (50) placé entre les deux ailes (13, 13') de la poutre en U (1) et reposant sur deux rails de guidage (G) par l'intermédiaire de deux organes de roulement écartés longitudinalement et comprenant chacun une paire de roues (53) placées à l'extérieur de la poutre (1) et montées à deux extrémités d'un essieu (52) passant dans un alésage (55) du châssis (50) et traversant les deux ailes (13, 13') de la poutre (1) en passant dans des trous oblongs (16) ménagés dans lesdites ailes (13, 13') et ayant chacun une hauteur suffisante pour permettre les déplacements verticaux de la poutre (1) entre la position abaissée et la position relevée.

15. Dispositif de convoyage selon la revendication 14, **caractérisé par le fait que**, de chaque côté de la poutre (1), les roues (53, 53') de chaque chariot de support (5, 5') sont logées entre deux semelles écartées verticalement d'une distance un peu supérieure, au jeu près, au diamètre des roues, respectivement une semelle inférieure constituant un chemin de guidage et une semelle supérieure constituant un moyen anti-relevage.

16. Dispositif de convoyage selon l'une des revendications 14 et 15, **caractérisé par le fait que** chaque trou oblong (16) de passage d'une extrémité d'un essieu (52) a une largeur sensiblement égale au diamètre dudit essieu (52) de façon à constituer un moyen de solidarisation, dans le sens longitudinal, de la poutre (1) avec le chariot de support correspondant (5).

17. Dispositif de convoyage selon l'une des revendications précédentes, **caractérisé par le fait qu'**il comprend un moyen de commande du déplacement longitudinal de la poutre, constitué d'au moins un vérin hydraulique ayant un premier élément (64) prenant appui sur une partie (16) solidaire, en déplacement longitudinal, de la poutre (1).

18. Dispositif de convoyage selon l'une des revendications 1 à 16, **caractérisé par le fait qu'**il comprend un moyen de déplacement longitudinal de la poutre (1) comprenant un câble (7) passant sur deux moyens de renvoi (71, 72) placées respectivement à deux extrémités du chemin de guidage (G), et ayant deux brins fixés respectivement sur deux extrémités de la poutre de support (1), ledit câble (7) étant entraîné en deux sens opposés pour la commande, respectivement, de l'avancement et du recul de la poutre (1).

19. Dispositif de convoyage selon l'une des revendications précédentes, **caractérisé par le fait que** les vérins (4, 4') de réglage de niveau de la poutre (1) sont des vérins hydrauliques associés à un circuit (S) d'alimentation desdits vérins à un même débit constant pour le maintien de l'horizontalité de la poutre pendant ses déplacements, quelle que soit la répartition des charges transportées.

## Patentansprüche

1. Vorrichtung zum schrittweisen Fördern von massiven Gegenständen, die eine stationäre Reihe von Ablegestationen (3) umfasst, die gemäß einer Längsrichtung der Bewegung angeordnet und in Ebenen (P2) zentriert sind, die zur Längsrichtung quer und gemäß der Längsrichtung um einen konstanten Schritt (a) beabstandet sind, und die mindestens eine bewegliche Reihe von Übernahmestationen (2) umfasst, die um den gleichen Schritt (a) gemäß der Längsrichtung beabstandet und auf mindestens einem Längstragbalken (1) angeordnet sind, der einerseits senkrecht zwischen einer abgesenkten Stellung und einer angehobenen Stellung, für welche die Übernahmestationen (2) jeweils unter und über den Ablagestationen (3) platziert sind, und andererseits längs zwischen einer zurückgefahrenen und einer vorgefahrenen Stellung, für welche jede Übernahmestation (2) abwechselnd in den Querebenen (P2) von zwei aufeinander folgenden Ablegestationen (3) zentriert ist, beweglich ist, **dadurch gekennzeichnet, dass** der Tragbalken (1) über mindestens zwei gleitende Auflageelemente mit einstellbarer Höhe (4, 5)(4', 5') auf dem Boden ruht, welche sich senkrecht auf mindestens einem Teil der Höhe des Balkens (1) erstrecken und die jeweils mindestens zwei Zylinder (4, 4') zum Niveaueinstellen umfassen, die synchron betätigt werden, und mit mindestens zwei gleitenden Mitteln (5, 5') zum Führen des Tragbalkens (1), die das Längsbewegen desselben jeweils in eine Vorlaufrichtung in angehobener Stellung und in eine Rücklaufrichtung in abgesenkter Stellung erlauben, verbunden sind, wobei jeder Zylinder (4, 4') zwei Elemente (41, 42) hat, die in entgegengesetzte Richtungen jeweils auf dem Balken (1) und auf dem Boden (a) aufliegen.

2. Fördervorrichtung nach Anspruch 1, **dadurch gekennzeichnet, dass** der Längstragbalken (1) eine horizontale Sohle (11) umfasst, die eine obere Fläche (12) hat, auf welcher die Übernahmestationen (2) montiert sind, und eine untere Fläche (12') hat, auf welcher die Einstellzylinder (4, 4') aufliegen, und mindestens eine senkrechte Versteifung (13), die eine Höhe (h) hat, die ausreicht, um die Starrheit des Balkens (1) unter der Last der transportierten Gegenstände sicherzustellen, und dass sich die Einstellzylinder (4, 4') in abgesenkter Stellung des Balkens (1) senkrecht auf mindestens einem Teil der Höhe (h) des Steges (13) erstrecken.

3. Fördervorrichtung nach Anspruch 2, **dadurch gekennzeichnet, dass** der Längstragbalken (1) im Querschnitt ein umgekehrtes U-Profil aufweist, das einen oberen Teil (11) umfasst, der im Wesentlichen horizontal ist, auf welchem die Übernahmestationen (2) eingerichtet sind, und das zwei im Wesentlichen senkrechte Flügel (13, 13') zum Versteifen des Längstragbalkens (1) aufweist, zwischen welchen mindestens die Zylinder (4, 4') zum Niveaueinstellen aufgenommen sind.

4. Fördervorrichtung nach einem der vorhergehenden Ansprüche, **dadurch gekennzeichnet, dass** die Einstellzylinder (4, 4') auf mindestens zwei Wagen (5, 5') aufliegen, die über Rollorgane (53) auf einem Führungsweg (G) ruhen, der auf dem Boden parallel zur Längsrichtung (10) des Bewegens des Balkens (1) ruht, wobei die Wagen (5, 5') Mittel zum gleitenden Führen des Balkens (1) auf einem von den Einstellzylindern (4, 4') festgelegten konstanten Niveau bilden.

5. Fördervorrichtung nach Anspruch 4, **dadurch gekennzeichnet, dass** jeder Tragwagen ein starres Chassis (50) umfasst, das auf dem Längsführungsweg (G) über zwei Rollorgane (52, 53) (52', 53'), welche längs beabstandet sind, ruht und auf dem mindestens ein Hydraulikzylinder (4) zum Einstellen des Niveaus des Tragbalkens (1) montiert ist.

6. Fördervorrichtung nach Anspruch 5, **dadurch gekennzeichnet, dass** die zwei Rollorgane des Wagens (5) längs zu beiden Seiten eines zentralen Teils (51) des Chassis (50) beabstandet sind, das eine Auflageplattform für mindestens einen Einstellzylinder (4) bildet, der ein erstes Element (41) hat, das auf dem Chassis (50) aufliegt, und ein zweites Element (42, 43), das auf dem Balken (1) aufliegt.

7. Fördervorrichtung nach Anspruch 6, **dadurch gekennzeichnet, dass** jedes Rollorgan des Wagens (5) ein Paar Räder (53) umfasst, die jedes auf einer Längsschiene (G) rollen und auf einer Achse (52) montiert sind, die durch eine Bohrung (55) mit horizontaler Achse verläuft, die in dem Chassis (50) des Wagens (5) eingerichtet ist.

8. Fördervorrichtung nach einem der Ansprüche 4 bis 7, **dadurch gekennzeichnet, dass** die Tragwagen(5, 5') der Einstellzylinder (4, 4') mit dem Balken (1) in der Längsrichtung so fest verbunden sind, dass sie eine flache Einheit bilden, die sich wie ein Waggon verhält, der auf dem Führungsweg (G) rollt.

9. Fördervorrichtung nach Anspruch 8, **dadurch gekennzeichnet, dass** die Wagen (5, 5') zum Tragen der Einstellzylinder (4, 4') durch eine Verbindungsstange (61) mit fixer Länge verbunden sind und dass der Tragbalken (1) mit Mitteln (6) zum festen Verbinden mit der Verbindungsstange (61) in Längsrichtung versehen ist.

10. Fördervorrichtung nach einem der Ansprüche 8 und 9, **dadurch gekennzeichnet, dass** jeder Einstellzylinder (4, 4') zwei Elemente (41, 42) umfasst, von denen das eine (41) in senkrechter Bewegung jeweils mit dem entsprechenden Tragwagen (5, 5') und das andere (42) mit dem Tragbalken (1) verbunden ist, und dass die Tragwagen (5, 5') durch ein Antihubmittel (63), das sich dem Abheben des einen oder des anderen Tragwagens (5, 5') in Bezug auf den Führungsweg (G) widersetzt, auf den Führungsweg (G) gedrückt gehalten werden.

11. Fördervorrichtung nach Anspruch 10, **dadurch gekennzeichnet, dass** die Tragwagen (5, 5') der Einstellzylinder (4, 4') in Längsrichtung durch mindestens eine Verbindungsstange verbunden sind, die aus einem Profil (61) besteht, das mindestens eine Sohle hat, die unter mindestens zwei Antihubwalzen (63), die längs beabstandet sind, verläuft.

12. Fördervorrichtung nach einem der Ansprüche 4 bis 11, wobei die Niveaueinstellzylinder (4, 4') auf mindestens zwei Tragwagen (5, 5') aufliegen, die über Rollorgane (53, 53') auf einem Führungsweg (G) ruhen, **dadurch gekennzeichnet, dass** die Einheit jedes Tragwagens (5) mit seinen Rollorganen (53, 53') und dem Einstellzylinder (4) eine Breite aufweist, die kleiner ist als die des Raums (14) zwischen den zwei Flügeln (13, 13') des Tragbalkens (1), so dass sie sich in abgesenkter Stellung des Tragbalkens (1) zumindest teilweise in den Raum (14) fügen.

13. Fördervorrichtung nach Anspruch 11, **dadurch gekennzeichnet, dass** der Führungsweg (G) eine Breite aufweist, die kleiner ist als der Raum (e) zwischen den zwei Flügeln (13, 13') des Balkens (1), so dass er in Tiefstellung des Balkens (1) zumindest teilweise in den genannten Raum eindringt.

14. Fördervorrichtung nach einem der Ansprüche 4 bis 11, bei der die Niveaueinstellzylinder (4, 4') auf mindestens zwei Tragwagen (5, 5') aufliegen, **dadurch gekennzeichnet, dass** jeder Tragwagen (5, 5') ein Chassis (50), das zwischen den zwei Flügeln (13, 13') des U-Tragbalkens (1) platziert ist und auf zwei Führungsschienen (G) über zwei Rollorgane aufliegt, die längs beabstandet sind, und jeweils ein Paar Räder (53) umfasst, die außerhalb des Balkens (1) platziert und an zwei Enden einer Achse (52) montiert sind, die durch eine Bohrung (55) des Chassis (50) verläuft und die zwei Flügel (13, 13') des Balkens (1) durchquert, indem sie durch längliche Löcher (16) verläuft, die in den Flügeln (13, 13') eingerichtet sind und jedes eine ausreichende Höhe hat, um senkrechte Bewegungen des Balkens (1) zwischen der abgesenkten und der angehobenen Stellung zu erlauben.

15. Fördervorrichtung nach Anspruch 14, **dadurch gekennzeichnet, dass** zu jeder Seite des Balkens (1) die Räder (53, 53') jedes Tragwagens (5, 5') zwischen zwei Sohlen aufgenommen sind, die senkrecht um eine Entfernung beabstandet sind, die bis auf das Spiel etwas größer ist als der Durchmesser der Räder, wobei eine untere Sohle einen Führungsweg und eine obere Sohle ein Antihubmittel bildet.

16. Fördervorrichtung nach einem der Ansprüche 14 und 15, **dadurch gekennzeichnet, dass** jedes längliche Loch (16) zum Durchgehen eines Endes einer Achse (52) eine Breite hat, die im Wesentlichen gleich dem Durchmesser der Achse (52) ist, so dass ein Mittel zum festen Verbinden des Balkens (1) mit dem entsprechenden Tragwagen (5) in Längsrichtung gebildet ist.

17. Fördervorrichtung nach einem der vorhergehenden Ansprüche, **dadurch gekennzeichnet, dass** sie ein Steuermittel für die Längsbewegung des Balkens umfasst, das aus mindestens einem Hydraulikzylinder besteht, der ein erstes Element (64) hat, das auf einem Teil (16) aufliegt, der in Bezug auf eine Längsbewegung fest mit dem Balken (1) verbunden ist.

18. Fördervorrichtung nach einem der Ansprüche 1 bis 16, **dadurch gekennzeichnet, dass** sie ein Mittel zum Längsbewegen des Balkens (1) umfasst, das ein Kabel (7) umfasst, das auf zwei Umlenkmitteln (71, 72) verläuft, die jeweils an zwei Enden des Führungswegs (G) platziert sind, und das zwei Stränge hat, die jeweils auf zwei Enden des Tragbalkens (1) befestigt sind, wobei das Kabel (7) in zwei entgegengesetzte Richtungen zum jeweiligen Steuern des Vorlaufs und Rücklaufs des Balkens (1) angetrieben ist.

19. Fördervorrichtung nach einem der vorhergehenden Ansprüche, **dadurch gekennzeichnet, dass** die Zylinder (4, 4') zum Einstellen des Niveaus des Balkens (1) Hydraulikzylinder sind, die mit einem Kreislauf (S) zum Versorgen der Zylinder mit einem gleichen konstanten Durchfluss zum Aufrechterhalten der Horizontallage des Balkens ungeachtet der Verteilung der transportierten Lasten während seiner Bewegungen verbunden sind.

## Claims

1. A stepwise conveyor device for the transport of massive objects, comprising a fixed series of laying stations (3) distributed along a longitudinal displacement direction and centred on planes (P2) transversal to the longitudinal direction and spaced apart according to the longitudinal direction by a constant pitch (a) and at least a mobile series of recovery stations (2) spaced apart according to the longitudinal direction by the same pitch (a) and arranged on at least one longitudinal supporting beam (1) mobile on the one hand vertically, between a lowered position and a raised position for which the recovery stations (2) are placed, respectively, below and above laying stations (3) and, on the other hand, longitudinally, between a backward position and a forward position for which each recovery station (2) is centred, alternately, on the transversal planes (P2) of two successive laying stations (3), **characterised in that** the supporting beam (1) rests on the floor by means of at least two sliding bearing members, of adjustable height (4, 5) (4', 5') extending vertically over at least one portion of the height of the beam (1) and comprising, respectively, at least two actuators (4, 4') for level adjustment in a synchronous fashion and associated with at least two sliding guiding means (5, 5') of the supporting beam (1) enabling longitudinal displacement of the said beam, respectively in a forward direction in raised position and in a backward direction in lowered position, whereas each actuator (4, 4') comprises two elements (41, 42) resting in opposed directions, respectively on the beam (1) and on the floor (A).

2. A conveying device according to claim 1, **characterised in that** the supporting beam (1) comprises a horizontal sole (11) with an upper face (12) on which are mounted the laying stations (2) and a lower face (12') on which rest the adjustment actuators (4, 4') and at least one vertical stiffening girder (13), with sufficient height (h) to ensure rigidity of the beam (1) under the load of the objects transported, and **in that** the said adjustment actuators (4, 4') extend vertically on at least one section of the height (h) of the girder (13) in the lowered position of the beam (1).

3. A conveying device according to claim 2, **characterised in that** the supporting beam (1) exhibits, as a transversal section, a reverted U-shaped bar comprising an upper substantially horizontal section (11), on which are provided the laying stations (2) and two substantially vertical wings (13, 13') for stiffening the beam (1), between which are located at least the level adjustment actuators (4, 4').

4. A conveying device according to any one of the previous claims, **characterised in that** the adjustment actuators (4, 4') bear upon at least two carriages (5, 5') resting, by means of running gears (53), on a guiding path (G) provided on the floor, parallel to the longitudinal direction (10) of displacement of the beam (1), whereas the said carriages (5, 5') provide sliding guiding means of the beam (1) at a constant level determined by the adjustment actuators (4, 4').

5. A conveying device according to claim 4, **characterised in that** each supporting carriage comprises a rigid chassis (50) resting on the longitudinal guiding path (G) by means of two running gears (52, 53) (52', 53') spaced longitudinally and on which is mounted at least one hydraulic actuator (4) for level adjustment of the supporting beam (1).

6. A conveying device according to claim 5, **characterised in that** both running gears of the carriage (5) are spaced longitudinally on either side of a central section (51) of the chassis (50) forming a bearing platform for at least one adjustment actuator (4) having a first element (41) bearing upon the chassis (50) and a second element (42, 43) bearing upon the beam (1).

7. A conveying device according to claim 6, **characterised in that** each running gear of the carriage (5) comprises a pair of wheels (53) each running on a longitudinal rail (G) and mounted on an axle (52) passing through a bore (55) with horizontal axis provided in the chassis (50) of the carriage (5).

8. A conveying device according to one of claims 4 to 7, **characterised in that** the supporting carriages (5, 5') of the adjustment actuators (4, 4') are integral with the beam (1) along the longitudinal direction in order to form a flat assembly behaving like a wagon running on the guiding path (G).

9. A conveying device according to claim 8, **characterised in that** the carriages (5, 5') supporting the adjustment actuators (4, 4') are connected by a linking bar (61) of fixed length and **in that** the supporting beam (1) is provided with means (6) for connection with the linking bar (61), in the longitudinal direction.

10. A conveying device according to any one of claims 8 and 9, **characterised in that** each adjustment actuator (4, 4') comprises two elements (41, 42) integral, in vertical displacement, respectively one (41) with the corresponding supporting carriage (5, 5') and the other (42) with the beam (1) and **in that** the said supporting carriages (5, 5') are held applied to the guiding path (G) by an anti-rise means (63) opposing the lifting motion of either of the supporting carriages (5, 5') with respect to the guiding path (G).

11. A conveying device according to claim 10, **characterised in that** the supporting carriages (5, 5') of the adjustment actuators (4, 4') are connected in the longitudinal direction by at least one linking bar made of a structural bar (61) having at least one sole passing below at least two anti-lift rollers (63) spaced longitudinally.

12. A conveying device according to one of claims 4 to 11, in which the level adjustment actuators (4, 4') bear upon at least two supporting carriages (5, 5') resting, by means of running gears (53, 53') on a guiding path (G), **characterised in that** the assembly of each supporting carriage (5) with its running gears (53, 53') and the adjustment actuator (4) are not as wide as the space (14) between both wings (13, 13') of the beam (1) in order to rest at least partially in the said space (14) in lowered position of the beam (1).

13. A conveying device according to claim 11, **characterised in that** the guiding path (G) is not as wide as the space (e) between both wings (13, 13') of the beam (1) in order to penetrate at least partially into the said space, in lowered position of the beam (1).

14. A conveying device according to one of claims 4 to 11, in which the level adjustment actuators (4, 4') bear upon at least two supporting carriages (5, 5') **characterised in that** each supporting carriage (5, 5') comprises a chassis (50) placed between both wings (13, 13') of the U-shaped beam (1) and resting on both guiding rails (G) by means of two running gears spaced longitudinally and each containing a pair of wheels (53) placed outside the beam (1) and mounted at two extremities of an axle (52) running through a bore (55) into the chassis (50) and crossing both wings (13, 13') of the beam (1) while running through oblong holes (16) provided in the said wings (13, 13') and each of sufficient height to enable vertical displacements of the beam (1) between the lowered position and the raised position.

15. A conveying device according to claim 14, **characterised in that**, on each side of the beam (1), the wheels (53, 53') of each supporting carriage (5, 5') are located between two soles spaced vertically by a distance slightly greater, taking into account the necessary clearance, than the diameter of the wheels, whereas respectively a lower sole makes up a guiding path and an upper sole an anti-lift means.

16. A conveying device according to one of claims 14 and 15, **characterised in that** the width of each oblong hole (16) for passing the extremity of an axle (52) is substantially equal to the diameter of the said axle (52) in order to provide a connection means, in the longitudinal direction, of the beam (1) with the corresponding supporting carriage (5).

17. A conveying device according to one of the previous claims, **characterised in that** it comprises a means for controlling the longitudinal displacement of the beam, made of at least one hydraulic actuator with a first element (64) bearing upon a section (16) integral with the beam (1), in longitudinal displacement.

18. A conveying device according to one of claims 1 to 16, **characterised in that** it comprises a means for longitudinal displacement of the beam (1) comprising a cable (7) running over two intermediate means (71, 72) placed respectively at two extremities of the guiding path (G), and having two ends fixed respectively at both extremities of the supporting beam (1), whereas the said cable (7) is driven into two opposite directions to control, respectively, the forward and the backward motion of the beam (1).

19. A conveying device according to one of the previous claims, **characterised in that** the actuators (4, 4') of level adjustment of the beam (1) are hydraulic actuators associated with a system (S) for feeding the said actuators at a same constant flowrate to maintain the beam horizontal during its displacements, regardless of the distribution of the loads transported.
